# EUROPEAN PATENT APPLICATION

(11) **EP 4 378 740 A1**
(43) Date of publication of application: **05.06.2024**
(21) Application number: 22848609.8
(22) Date of filing: 27.07.2022
(51) Int. Cl.: B60L 15/20, H02K 7/10, H02P 29/00

(54) **ELECTRIC VEHICLE CONTROL SYSTEM AND ELECTRIC VEHICLE**

(30) Priority: 28.07.2021 WO PCT/CN2021/108919
(71) Applicant: Huawei Technologies Co., Ltd., Shenzhen, Guangdong 518129 (CN)
(72) Inventor: LIU, Zheng, Shenzhen, Guangdong 518129 (CN); LIANG, Chen, Shenzhen, Guangdong 518129 (CN); LIU, Ming, Shenzhen, Guangdong 518129 (CN)
(74) Representative: Epping - Hermann - Fischer
(86) International application number: PCT/CN2022/108380
(87) International publication number: WO 2023/006004

(57) **Abstract**

An electric vehicle control system is provided, including: a first control circuit (21), a second control circuit (22), a first switching circuit (23), a second switching circuit (24), a first execution apparatus (25), and a second execution apparatus (26). The first control circuit (21) is connected to the first switching circuit (23), and the first control circuit (21) supplies a drive current to the first execution apparatus (25) and/or the second execution apparatus (26), and controls a status of the first switching circuit (23). The second control circuit (22) is connected to the second switching circuit (24), and the second control circuit (22) supplies a drive current to the second execution apparatus (26) and/or the first execution apparatus (25), and controls a status of the second switching circuit (24). The first switching circuit (23) is separately connected to the first execution apparatus (25) and the second execution apparatus (26). An electric vehicle is further provided. The electric vehicle control system and the electric vehicle ensure steering effect of the electric vehicle.

## Description

### CROSS-REFERENCE TO RELATED APPLICATIONS

This application claims priority to Chinese Patent Application No. PCT/CN2021/108919, filed with the China National Intellectual Property Administration on July 28, 2021 and entitled "ELECTRIC VEHICLE CONTROL SYSTEM AND ELECTRIC VEHICLE", which is incorporated herein by reference in its entirety.

### TECHNICAL FIELD

This application relates to the field of vehicle technologies, and specifically, to an electric vehicle control system and an electric vehicle.

### BACKGROUND

With development of new energy technologies, electric vehicles have received increasingly extensive attention. A control system is disposed in the electric vehicle, and the control system may control steering, driving, or braking of the electric vehicle. When the control system is configured to control steering of the electric vehicle, the control system may adjust torque output to an execution apparatus that is connected to a steering apparatus, to control steering of the electric vehicle.

To improve working stability of the control system, the control system includes two control modules. The two control modules respectively control some motors. When either of the two control modules is faulty, the other control module that is not faulty can control some motors to implement steering of the electric vehicle. However, when one control module is faulty, the other control module can control only some motors, and consequently, steering effect of the electric vehicle is unstable, and user experience is affected.

### SUMMARY

This application provides an electric vehicle control system and an electric vehicle, to ensure steering effect of the electric vehicle.

According to a first aspect, an embodiment of this application provides an electric vehicle control system. The electric vehicle control system includes a first control circuit, a second control circuit, a first switching circuit, a second switching circuit, a first execution apparatus, and a second execution apparatus.

The first control circuit is connected to the first switching circuit, and the first control circuit is configured to: provide a drive current for the first execution apparatus and/or the second execution apparatus, and control a status of the first switching circuit. The second control circuit is connected to the second switching circuit, and the second control circuit is configured to: provide a drive current for the second execution apparatus and/or the first execution apparatus, and control a status of the second switching circuit. The first switching circuit is separately connected to the first execution apparatus and the second execution apparatus, where when the first switching circuit is in a first state, the first control circuit is connected to the first execution apparatus, and when the first switching circuit is in a second state, the first control circuit is separately connected to the first execution apparatus and the second execution apparatus. The second switching circuit is separately connected to the first execution apparatus and the second execution apparatus, where when the second switching circuit is in a third state, the second control circuit is connected to the second execution apparatus, and when the second switching circuit is in a fourth state, the second control circuit is separately connected to the first execution apparatus and the second execution apparatus.

When the foregoing electric vehicle control system is used to control steering of the electric vehicle, if both the first control circuit and the second control circuit are normal, the first control circuit may provide a drive current for the first execution apparatus through the first switching circuit, the first execution apparatus provides first steering power, the second control circuit may provide a drive current for the second execution apparatus through the second switching circuit, and the second execution apparatus provides second steering power. Alternatively, if either the first control circuit or the second control circuit is faulty, a normal control circuit may provide a drive current for each of the first execution apparatus and the second execution apparatus through a connected switching circuit, and the first execution apparatus and the second execution apparatus respectively provide first steering power and second steering power, to ensure steering effect of the electric vehicle.

In a possible implementation, the first switching circuit includes a first switch module and a second switch module.

An input end of the first switch module is connected to the first control circuit, and an output end of the first switch module is connected to the first execution apparatus. An input end of the second switch module is connected to the first control circuit, and an output end of the second switch module is connected to the second execution apparatus. The second switching circuit includes a third switch module and a fourth switch module. An input end of the third switch module is connected to the second control circuit, and an output end of the third switch module is connected to the second execution apparatus. An input end of the fourth switch module is connected to the second control circuit, and an output end of the fourth switch module is connected to the first execution apparatus.

In the foregoing electric vehicle control system, a connection between the first control circuit and the first execution apparatus may be controlled by adjusting a status of the first switch module, a connection between the first control circuit and the second execution apparatus may be controlled by adjusting a status of the second switch module, a connection between the second control circuit and the second execution apparatus may be controlled by adjusting a status of the third switch module, and a connection between the second control circuit and the first execution apparatus may be controlled by adjusting a status of the fourth switch module.

In a possible implementation, the first control circuit includes a first control chip, a first drive module, a first drive signal generation module, a first control module, and a first power supply module; and the second control circuit includes a second control chip, a second drive module, a second drive signal generation module, a second control module, and a second power supply module.

The first power supply module is separately connected to the first control chip, the first drive module, and the first drive signal generation module; and the first power supply module is configured to supply power to the first control chip, the first drive module, and the first drive signal generation module. The first control chip is connected to the first drive signal generation module, and is configured to control the first drive signal generation module to generate a first drive signal. The first drive signal generation module is connected to the first drive module, and the first drive signal generation module is configured to: generate the first drive signal and output the first drive signal to the first drive module. The first drive module is connected to the first switching circuit, and the first drive module is configured to: convert, based on the first drive signal, a first voltage output by the first power supply module into a first drive current, and output the first drive current to the first switching circuit. The first control module is separately connected to the first power supply module, the first drive signal generation module, the first control chip, the first switching circuit, and the second control circuit. The first control module is configured to: generate a first signal based on fault statuses of the first power supply module, the first control chip, and the first drive signal generation module; output the first signal to the second control circuit; receive a second signal sent by the second control circuit; generate a first control signal based on the first signal and the second signal; and output the first control signal to the first switching circuit, where the first control signal is used to control a status of the first switching circuit, the first signal represents a fault status of the first control circuit, and the second signal represents a fault status of the second control circuit.

The second power supply module is separately connected to the second drive module, the second drive signal generation module, and the second control chip; and the second power supply module is configured to supply power to the second drive module, the second drive signal generation module, and the second control chip. The second control chip is connected to the second drive signal generation module, and the second control chip is configured to control the second drive signal generation circuit to generate a second drive signal. The second drive signal generation module is connected to the second drive module, and is configured to: generate the second drive signal and output the second drive signal to the second drive module. The second drive module is connected to the second switching circuit, and the second drive module is configured to: convert, based on the second drive signal, a second voltage output by the second power supply module into a second drive current; and output the second drive current to the second switching circuit. The second control module is separately connected to the second power supply module, the second drive signal generation module, the second control chip, the second switching circuit, and the first control circuit. The second control module is configured to: generate the second signal based on fault statuses of the second power supply module, the second control chip, and the second drive signal generation module; receive the first signal; generate a second control signal based on the first signal and the second signal; and output the second control signal to the second switching circuit, where the second control signal is used to control a status of the second switching circuit. In the foregoing electric vehicle control system, the first control module may determine the fault status of the first control circuit based on fault statuses of a plurality of components that the first drive current needs to pass through, and accurately control a state switching moment of the first switching circuit based on the fault statuses of the first control circuit and the second control circuit, to ensure steering effect of the electric vehicle.

In a possible implementation, the first control module includes a first fault detection module and a first control sub-module; and the second control module includes a second fault detection module and a second control sub-module.

The first fault detection module is separately connected to the first power supply module, the first drive signal generation module, the first control chip, and the first control sub-module. The first fault detection module is configured to: detect the fault detection statuses of the first power supply module, the first drive signal generation module, and the first control chip; generate the first signal based on the fault detection statuses of the first power supply module, the first drive signal generation module, and the first control chip; and output the first signal to the first control sub-module and the second control circuit. The first control sub-module is separately connected to the first switching circuit and the second control circuit. The first control sub-module is configured to: receive the second signal sent by the second control circuit, generate the first control signal based on the first signal and the second signal, and output the first control signal to the first switching circuit. The second fault detection module is separately connected to the second power supply module, the second drive signal generation module, the second control chip, and the second control sub-module. The second fault detection module is configured to: detect the fault detection statuses of the second power supply module, the second drive signal generation module, and the second control chip; generate the second signal based on the fault detection statuses of the second power supply module, the second drive signal generation module, and the second control chip; and output the second signal to the first control circuit. The second control sub-module is separately connected to the second switching circuit and the first control circuit. The second control sub-module is configured to: generate the second control signal based on the first signal and the second signal, and send the second control signal to the second switching circuit.

In a possible implementation, the first fault detection module includes a first resistor, a second resistor, a third resistor, a first switch, and a second switch.

A first electrode of the first switch is connected to a second end of the first resistor, a second electrode of the first switch is connected to a ground cable, and a control electrode of the first switch is separately connected to the first control chip, the first drive signal generation module, and the first power supply module. A first end of the first resistor is connected to a first power supply, and the second end of the first resistor is separately connected to a first end of the second resistor and a control electrode of the second switch. A second end of the second resistor is connected to the ground cable. A first electrode of the second switch is connected to a second end of the third resistor, and a second electrode of the second switch is connected to the ground cable.

A first end of the third resistor is connected to a second power supply, and the second end of the third resistor outputs the first signal.

In the foregoing electric vehicle control system, when any one of the first control chip, the first drive signal generation module, and the first power supply module is faulty, the control electrode of the first switch is grounded, so that statuses of the first switch and the second switch change. When the status of the second switch changes, a level of the second end of the third resistor also changes, so that the first signal representing a fault of the first control circuit is output.

In a possible implementation, the first fault detection module further includes a fourth resistor, a fifth resistor, a sixth resistor, a first diode, and a second diode.

The first diode is connected between the first drive signal generation module and the control electrode of the first switch. The second diode is connected between the first control chip and the control electrode of the first switch. The fourth resistor is connected between the control electrode of the first switch and the second electrode of the first switch. The fifth resistor is connected between the second end of the first resistor and the control electrode of the second switch. The sixth resistor is connected between the second end of the third resistor and the first electrode of the second switch.

In the foregoing electric vehicle control system, to prevent the first fault detection module from being damaged due to excessive electric energy generated by the first signal generation module and the first control chip, diodes may be disposed between the first control chip and the first switch and between the first drive signal generation module and the first switch.

In a possible implementation, the first fault detection module further includes a seventh resistor. A first end of the seventh resistor is connected to a third power supply, and a second end of the seventh resistor is separately connected to the first end of the second resistor, the first electrode of the first switch, and the control electrode of the second switch.

In the foregoing electric vehicle control system, the first control circuit and the first switching circuit form a control system, and the second control circuit and the second switching circuit form a control system. To prevent a fault of the control system from causing a case in which the first power supply configured to supply power to the fault detection module cannot supply power normally, and consequently, a switch status deviates from a normal state, thereby causing a misoperation, power supply performed by a dual power supply can be controlled, to avoid an unstable switch status caused by control system switching.

In a possible implementation, the first execution apparatus includes a first motor assembly, and the second execution apparatus includes a second motor assembly.

In a possible implementation, the first motor assembly includes three first armature windings, and the first switch module includes third switches that are in a one-to-one correspondence with the first armature windings.

The second motor assembly includes three second armature windings, and the second switch module includes fourth switches that are in a one-to-one correspondence with the second armature windings.

A first electrode of each third switch is connected to the first control circuit, and a second electrode of each third switch is connected to a corresponding first armature winding. A first electrode of each fourth switch is connected to the first control circuit, and a second electrode of each fourth switch is connected to a corresponding second armature winding.

In a possible implementation, the second switch module further includes fifth switches that are in a one-to-one correspondence with the fourth switches. A second electrode of each fifth switch is connected to the first control circuit, and a first electrode of each fifth switch is connected to a first electrode of a corresponding fourth switch. Alternatively, a second electrode of each fifth switch is connected to a second electrode of a corresponding fourth switch, and the second electrode of each fifth switch is connected to a second armature winding corresponding to the connected fourth switch.

In the foregoing electric vehicle control system, the first control circuit is connected to the second armature winding through the fourth switch and the fifth switch, and polarities at joints of the fourth switch and the fifth switch are the same. In this case, a direction of a parasitic diode in the fourth switch is opposite to a direction of a parasitic diode in the fifth switch. Therefore, isolation between two control systems can be effectively implemented, mutual interference in a working process of the two control systems and component damage caused by current backflow are avoided, and running security of the system is ensured.

In a possible implementation, the third switch module includes sixth switches that are in a one-to-one correspondence with the second armature windings, and the fourth switch module includes seventh switches that are in a one-to-one correspondence with the first armature windings.

A first electrode of each sixth switch is connected to the second control circuit, and a second electrode of each sixth switch is connected to a corresponding second armature winding. A first electrode of each seventh switch is connected to the second control circuit, and a second electrode of each seventh switch is connected to a corresponding first armature winding.

In a possible implementation, the fourth switch module further includes eighth switches that are in a one-to-one correspondence with the seventh switches. A second electrode of each eighth switch is connected to the second control circuit, and a first electrode of each eighth switch is connected to a first electrode of a corresponding seventh switch. Alternatively, a second electrode of each eighth switch is connected to a second electrode of a corresponding seventh switch, and a first electrode of each eighth switch is connected to a first armature winding corresponding to the connected seventh switch.

In the foregoing electric vehicle control system, the second control circuit is connected to the first armature winding through the seventh switch and the eighth switch, and polarities at joints of the seventh switch and the eighth switch are the same. In this case, a direction of a parasitic diode in the seventh switch is opposite to a direction of a parasitic diode in the eighth switch. In this way, isolation between two control systems can be effectively implemented, mutual interference in a working process of the two control systems and component damage caused by current backflow are avoided, and running security of the system is ensured.

In a possible implementation, the electric vehicle control system may further include a power battery.

The power battery is separately connected to the first control circuit and the second control circuit, and the power battery is configured to supply power to the first control circuit and the second control circuit.

According to a second aspect, an embodiment of this application provides an electric vehicle. The electric vehicle may include a body, wheels, and the electric vehicle control system provided in any possible design of the first aspect.

When the foregoing electric vehicle is used, and steering needs to be performed on the electric vehicle, if both the first control circuit and the second control circuit are normal, the first control circuit may provide a drive current for the first execution apparatus through the first switching circuit, the first execution apparatus provides first steering power, the second control circuit may provide a drive current for the second execution apparatus through the second switching circuit, and the second execution apparatus provides second steering power. Alternatively, if either the first control circuit or the second control circuit is faulty, a normal control circuit may provide a drive current for each of the first execution apparatus and the second execution apparatus through a connected switching circuit, to provide first steering power and second steering power, and ensure steering effect of the electric vehicle.

### BRIEF DESCRIPTION OF DRAWINGS

FIG. 1 is a schematic diagram 1 of a structure of an electric vehicle control system according to an embodiment of this application;
FIG. 2 is a schematic diagram 2 of a structure of an electric vehicle control system according to an embodiment of this application;
FIG. 3 is a schematic diagram of a structure of a first control circuit according to an embodiment of this application;
FIG. 4 is a schematic diagram of a structure of a first drive module according to an embodiment of this application;
FIG. 5 is a schematic diagram 1 of a structure of a first fault detection module according to an embodiment of this application;
FIG. 6 is a schematic diagram 2 of a structure of a first fault detection module according to an embodiment of this application;
FIG. 7 is a schematic diagram of a structure of a second control circuit according to an embodiment of this application;
FIG. 8 is a schematic diagram 1 of a structure of a first switching circuit according to an embodiment of this application;
FIG. 9 is a schematic diagram 2 of a structure of a first switching circuit according to an embodiment of this application;
FIG. 10 is a schematic diagram 3 of a structure of a first switching circuit according to an embodiment of this application;
FIG. 11 is a schematic diagram 1 of a structure of a second switching circuit according to an embodiment of this application;
FIG. 12 is a schematic diagram 2 of a structure of a second switching circuit according to an embodiment of this application; and
FIG. 13 is a schematic diagram 3 of a structure of a second switching circuit according to an embodiment of this application.

### DESCRIPTION OF EMBODIMENTS

To make the objectives, technical solutions, and advantages of this application clearer, the following further describes this application in detail with reference to the accompanying drawings. It should be noted that, in the description of this application, "at least one" means one or more, and "a plurality of means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that a "connection" in embodiments of this application refers to an electric connection, and a connection between two electrical elements may be a direct or indirect connection between the two electrical elements. For example, a connection between A and B may represent that A and B are directly connected to each other, or A and B are indirectly connected to each other through one or more other electrical elements. For example, the connection between A and B may alternatively represent that A and C are directly connected to each other, C and B are directly connected to each other, and A and B are connected to each other through C.

It should be noted that switches in embodiments of this application may be one or more types of a plurality of types of switch devices such as a relay, a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), a gallium nitride field-effect transistor (GaN), and a silicon carbide (SiC) power transistor. Details are not described one by one again in embodiments of this application. Each switch device may include a first electrode, a second electrode, and a control electrode, where the control electrode is configured to control turning-on or turning-off of the switch device. When the switch device is turned on, a current may be transmitted between the first electrode and the second electrode of the switch device. When the switch device is turned off, the current cannot be transmitted between the first electrode and the second electrode of the switch device. The MOSFET is used as an example. The control electrode of the switch device is a gate; and the first electrode of the switch device may be a source of the switch device, and the second electrode of the switch device may be a drain of the switch device; or the first electrode may be a drain of the switch device, and the second electrode may be a source of the switch device. When there are a plurality of switch devices of a same type in a circuit, first electrodes of the plurality of switch devices all have a same polarity, and second electrodes of the plurality of switches also have a same polarity. For example, when there are a plurality of MOSFETs in the circuit, first electrodes of the plurality of MOSFETs may all be drains, and second electrodes of the plurality of MOSFETs may all be sources.

The following clearly and completely describes technical solutions in embodiments of this application with reference to accompanying drawings in embodiments of this application.

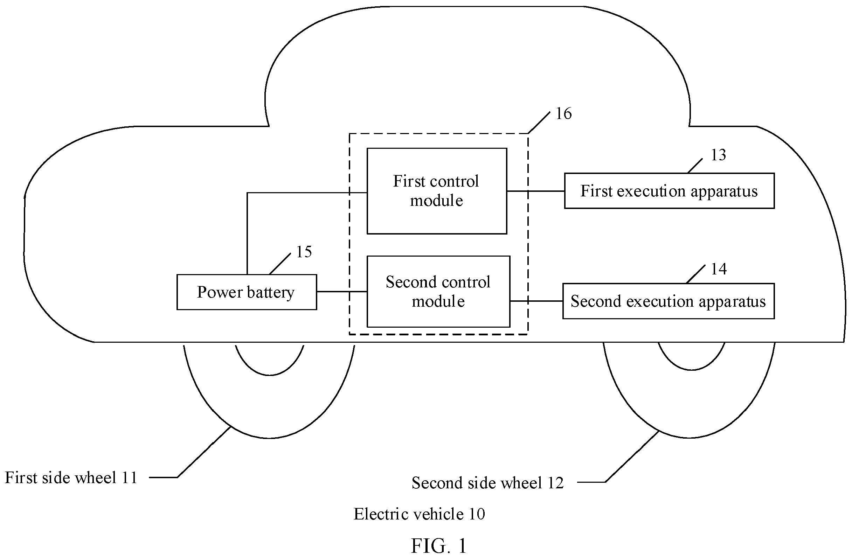

An electric vehicle may alternatively be referred to as a new energy vehicle, and is a vehicle driven by electric energy. As shown in FIG. 1, an electric vehicle 10 mainly includes first side wheels 11, second side wheels 12, a first execution apparatus 13, a second execution apparatus 14, a power battery 15, and a control system 16. The power battery 15 may be a large-capacity and high-power battery.

Specifically, the power battery 15 may provide a proper drive current for each of the first execution apparatus 13 and the second execution apparatus 14 by using the control system 16. The first execution apparatus 13 and the second execution apparatus 14 may convert the drive currents provided by the control system 16 of the electric vehicle into mechanical energy, and drive the electric vehicle to implement a corresponding operation.

In actual use, the control system 16 may control steering, driving, or braking of the electric vehicle. When the control system 16 controls steering of the electric vehicle, the electric vehicle 10 may further include a steering apparatus. The first execution apparatus 13 and the second execution apparatus 14 may be separately connected to the steering apparatus. The first execution apparatus 13 and the second execution apparatus 14 each provide a part of steering power for the steering apparatus. After receiving the steering power, the steering apparatus drives the electric vehicle to steer. The steering apparatus may be a steering gear, or may be another apparatus that can implement steering.

To implement safe steering of the electric vehicle, the control system 16 may include two control modules: a first control module and a second control module. The power battery 15 may separately supply power to the first control module and the second control module. The first control module is connected to the first execution apparatus 13, and the second control module is connected to the second execution apparatus 14. The first control module provides a proper drive current for the first execution apparatus 13, and the second control module provides a proper drive current for the second execution apparatus 14.

When the foregoing control system is used to control steering of the electric vehicle, the first control module and the second control module each provide a part of steering power for the steering apparatus by using one execution apparatus. When either the first control module or the second control module is faulty, the execution apparatus connected to the faulty control module cannot output the steering power, and consequently, steering power obtained by the steering apparatus is reduced. In this case, steering effect of the electric vehicle cannot be ensured, and user experience is affected.

In view of this, embodiments of this application provide an electric vehicle control system and an electric vehicle. The electric vehicle control system may be applied to the electric vehicle, to control steering of the electric vehicle and ensure steering effect of the electric vehicle.

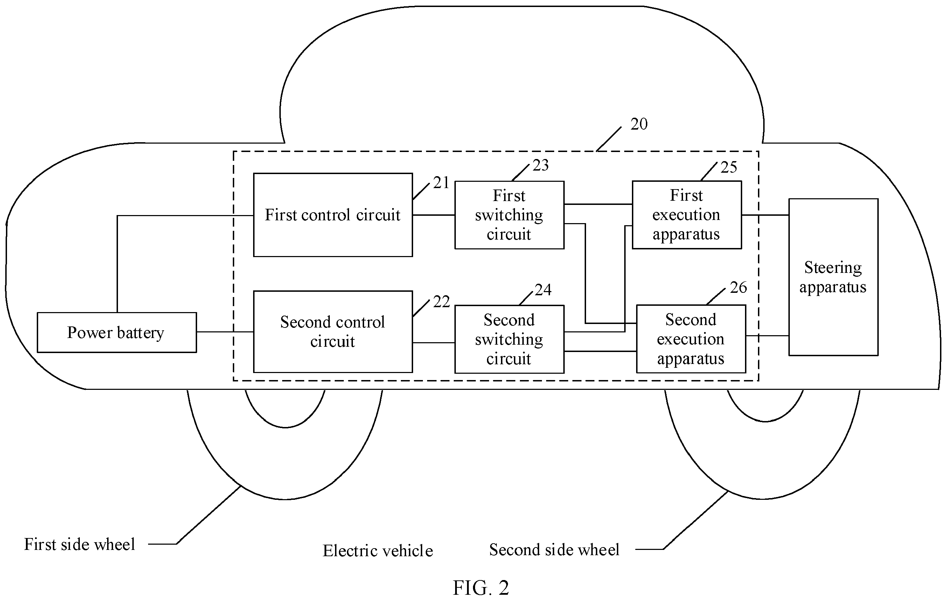

FIG. 2 is a schematic diagram of a structure of an electric vehicle control system. As shown in FIG. 2, an electric vehicle control system 20 may include a first control circuit 21, a second control circuit 22, a first switching circuit 23, a second switching circuit 24, a first execution apparatus 25, and a second execution apparatus 26.

The first control circuit 21 is connected to the first switching circuit 23, and the first control circuit 21 may provide a drive current for the first execution apparatus 25 and/or the second execution apparatus 26, and control a status of the first switching circuit 23. The second control circuit 22 is connected to the second switching circuit 24, and the second control circuit 22 may provide a drive current for the second execution apparatus 26 and/or the first execution apparatus 25, and control a status of the second switching circuit 24. The first switching circuit 23 is separately connected to the first execution apparatus 25 and the second execution apparatus 26. When the first switching circuit 23 is in a first state, the first control circuit 21 may be connected to the first execution apparatus 25. When the first switching circuit 23 is in a second state, the first control circuit 21 may be separately connected to the first execution apparatus 25 and the second execution apparatus 26, and the second switching circuit 24 is separately connected to the first execution apparatus 25 and the second execution apparatus 26. When the second switching circuit 24 is in a third state, the second control circuit 22 may be connected to the second execution apparatus 26. When the second switching circuit 24 is in a fourth state, the second control circuit 22 may be separately connected to the first execution apparatus 25 and the second execution apparatus 26. The first execution apparatus 25 and the second execution apparatus 26 may be coupled to a steering apparatus of the electric vehicle, and are configured to provide steering power for the steering apparatus. The steering apparatus may be connected to first side wheels and/or second side wheels of the electric vehicle, and is configured to control steering of the first side wheels and/or the second side wheels.

It should be noted that, in this application, one of a first side and a second side is a front side, and the other side is a rear side.

In actual use, the first execution apparatus 25 may be a first motor assembly, and the second execution apparatus 26 may be a second motor assembly. The first motor assembly and the second motor assembly are separately connected to the steering apparatus. The first motor assembly provides first steering power for the steering apparatus, and the second motor assembly provides second steering power for the steering apparatus. The steering apparatus is driven by the first steering power and the second steering power to control steering of the first side wheels and/or the second side wheels.

In the foregoing electric vehicle control system, when controlling the electric vehicle to steer, the first control circuit 21 may control the first switching circuit 23 to be in the first state, and the second control circuit 22 controls the second switching circuit 24 to be in the third state. In this case, the first control circuit 21 may provide a drive current for the first execution apparatus 25 through the first switching circuit 23, and the second control circuit 22 may provide a drive current for the second execution apparatus 26 through the second switching circuit 24. The first motor assembly converts the received drive current into mechanical energy to output the first steering power, and the second motor assembly converts the received drive current into mechanical energy to output the second steering power. The first motor assembly and the second motor assembly each provide a part of steering power for the steering apparatus. The steering apparatus drives the first side wheels and/or the second side wheels to steer.

When the first control circuit 21 is faulty, the second control circuit 22 may control the second switching circuit 24 to be in the fourth state. In this case, the second control circuit 22 may provide a drive current for each of the first execution apparatus 25 and the second execution apparatus 26 through the second switching circuit, to drive the electric vehicle to implement steering. Similarly, when the second control circuit 22 is faulty, the first control circuit 21 may control the first switching circuit 23 to be in the second state. In this case, the first control circuit 21 may provide a drive current for each of the first execution apparatus 25 and the second execution apparatus 26 through the first switching circuit 23, to control the electric vehicle to implement steering. To be specific, when either the first control circuit 21 or the second control circuit 22 is faulty, the first execution apparatus 25 and the second execution apparatus 26 each may obtain the drive current, so that all steering power is provided for the steering apparatus, and steering effect of the electric vehicle is ensured.

In actual use, to supply power to the first control circuit 21 and the second control circuit 22, the electric vehicle control system may further include a power battery. The power battery may be separately connected to the first control circuit 21 and the second control circuit 22, and supply power to the first control circuit 21 and the second control circuit 22.

The following describes specific structures of the first control circuit 21, the second control circuit 22, the first switching circuit 23, and the second switching circuit 24 in the electric vehicle control system.

### 1. First control circuit 21

The first control circuit 21 may be connected to the first switching circuit 23 and the second control circuit 22.

The first control circuit 21 may include a first control chip 211, a first drive module 212, a first drive signal generation module 213, a first control module 214, and a first power supply module 215.

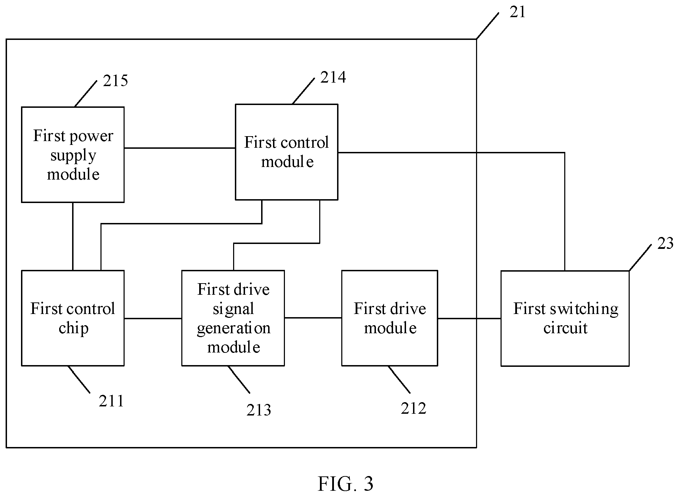

Specifically, as shown in FIG. 3, the first power supply module 215 is separately connected to the first control chip 211, the first drive module 212, and the first drive signal generation module 213, and the first power supply module 215 may supply power to the first control chip 211, the first drive module 212, and the first drive signal generation module 213. The first control chip 211 is connected to the first drive signal generation module 213, and is configured to: when steering needs to be performed on the electric vehicle, control the first drive signal generation module 213 to generate a first drive signal. The first drive signal generation module 213 is connected to the first drive module 212. The first drive signal generation module 213 may generate the first drive signal, and output the first drive signal to the first drive module 212. The first drive module 212 is connected to the first switching circuit 23. The first drive module 212 may convert, based on the first drive signal, a first voltage output by the first power supply module 215 into a first drive current, and output the first drive current to the first switching circuit 23. The first control module 214 is separately connected to the first power supply module 215, the first drive signal generation module 213, the first control chip 211, the first switching circuit 23, and the second control circuit 22. The first control module 214 may receive a first control signal sent by the second control circuit 22, generate a first signal based on fault statuses of the first power supply module 215, the first control chip 211, and the first drive signal generation module 213, output the first signal to the second control circuit 22, receive a second signal sent by the second control circuit 22, generate the first control signal based on the first signal and the second signal, and output the first control signal to the first switching circuit 23. The first control signal is used to control a status of the first switching circuit 21, the first signal represents a fault status of the first control circuit 21, and the second signal represents a fault status of the second control circuit 22.

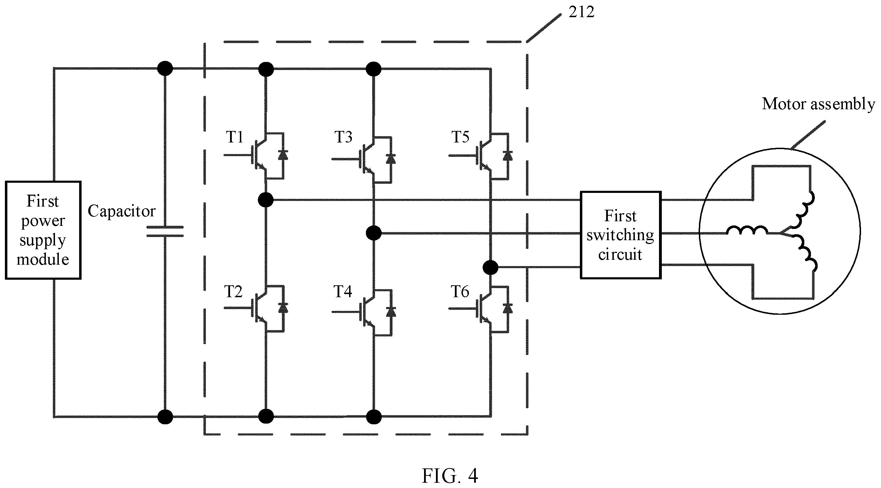

Specifically, the first control circuit 21 provides a drive current for the first execution apparatus 25 and/or the second execution apparatus 26 through the first switching circuit 23, so that the execution apparatus implements steering through the steering apparatus. The motor assemblies in the first execution apparatus 25 and the second execution apparatus 26 convert electric energy into mechanical energy based on an electromagnetic induction effect. Currently, a quantity of armature windings in a motor is usually 3. For example, the first execution apparatus 25 and the second execution apparatus 26 are three-phase motors. As shown in FIG. 4, the first drive module 212 configured to output a drive current to the motor may include three bridge arms, and a first bridge arm includes a switch T1 and a switch T2. A first electrode of the switch T1 is connected to a positive electrode of the first power supply module 215, a second electrode of the switch T1 is connected to a first electrode of the switch T2, and a second electrode of the switch T2 is connected to a negative electrode of the first power supply module 215. A middle point of the first bridge arm, namely, a connection point between the switch T1 and the switch T2, is connected to the first switching circuit 23.

A second bridge arm includes a switch T3 and a switch T4. A first electrode of the switch T3 is connected to the positive electrode of the first power supply module 215, a second electrode of the switch T3 is connected to a first electrode of the switch T4, and a second electrode of the switch T4 is connected to the negative electrode of the first power supply module 215. A middle point of the second bridge arm, namely, a connection point between the switch T3 and the switch T4, is connected to the first switching circuit 23.

A third bridge arm includes a switch T5 and a switch T6. A first electrode of the switch T5 is connected to the positive electrode of the first power supply module 215, a second electrode of the switch T5 is connected to a first electrode of the switch T6, and a second electrode of the switch T6 is connected to the negative electrode of the first power supply module 215. A middle point of the third bridge arm, namely, a connection point between the switch T5 and the switch T6, is connected to the first switching circuit.

In actual use, control electrodes of the switch T1 to the switch T6 are all connected to the first drive signal generation module 213. The first drive signal generation module 213 outputs the first drive signal. The first drive signal may control turning-on and turning-off of the switch T1 to the switch T6, so that the three bridge arms can convert the first voltage output by the first power supply module 215 into the first drive current in a form of a three-phase alternating current. The middle point in each bridge arm outputs one phase of the three-phase alternating current. The first drive module 212 outputs the three-phase alternating current to the motor assembly through the first switching circuit 23, so that the three armature windings on the motor assembly generate a spatial rotating magnetic field, thereby driving a motor rotor to rotate, converting electric energy into mechanical energy, and providing steering power for the steering apparatus.

In a possible implementation, when the first control circuit 21 is used to provide a drive current for each of the first motor assembly and the second motor assembly, steering power provided by the first motor assembly and the second motor assembly may be different. In this case, drive currents required by the first motor assembly and the second motor assembly are also different. To meet a steering requirement of the electric vehicle, the first drive module 212 may include six bridge arms. The first three bridge arms may be connected to the first motor assembly through the first switching circuit 23, and the last three bridge arms may be connected to the second motor assembly through the first switching circuit 23. When the first switching circuit 23 is in the second state, the first control circuit 21 separately provides a proper drive current for each of the first motor assembly and the second motor assembly by using the six bridge arms, to meet the steering requirement of the electric vehicle.

During specific implementation, the first drive module 212 can output the output three-phase alternating current to the first execution apparatus 25 and/or the second execution apparatus 26 only when the first switching circuit 23 is in a fixed state. The following describes in detail a structure of the first control module 214 and a process in which the first control module 214 controls a status of the first switching circuit 23.

The first control module 214 includes a first fault detection module and a first control sub-module. The first fault detection module is separately connected to the first power supply module 215, the first drive signal generation module 213, the first control chip 211, and the first control sub-module. The first fault detection module is configured to: detect the fault detection statuses of the first power supply module 215, the first drive signal generation module 213, and the first control chip 211; generate the first signal based on the fault detection statuses of the first power supply module 215, the first drive signal generation module 213, and the first control chip 211; and output the first signal to the first control sub-module and the second control circuit 22. The first control sub-module is separately connected to the first switching circuit 23 and the second control circuit 22. The first control sub-module is configured to: receive the second signal sent by the second control circuit 22, generate the first control signal based on the first signal and the second signal, and output the first control signal to the first switching circuit 23. The first control signal is used to control a status of the first switching circuit 23, the first signal represents a fault status of the first control circuit 21, and the second signal represents a fault status of the second control circuit 22. In actual use, when any one of the first power supply module 215, the first drive signal generation module 213, and the first control chip 211 is faulty, it may be determined that the first control circuit 21 is faulty.

During specific implementation, when the first signal represents that the first control circuit 21 is not faulty, the first control sub-module controls the first switching circuit 23 to be in the first state. In this case, the first drive module 212 may be connected to the first motor assembly, and the first drive module 212 may output a three-phase alternating current to the first motor assembly. The first motor assembly converts the received three-phase alternating current into mechanical energy, to output the first steering power to the steering apparatus. When the second signal represents that the second control circuit 22 is faulty, the first control sub-module may control the first switching circuit 23 to switch from the first state to the second state. In this case, the first drive module 212 may be connected to the first motor assembly and the second motor assembly, and the first drive module 212 may output a three-phase alternating current to the first motor assembly and the second motor assembly. The first motor assembly outputs the first steering power, and the second motor assembly outputs the second steering power. In other words, when the second control circuit 22 is faulty, the first control circuit 21 may control the first motor assembly and the second motor assembly to output all the steering power.

During specific implementation, to reduce energy consumption of an electric vehicle drive system, when it is determined that the first signal represents that the first control circuit 21 is faulty, the first control sub-module may stop sending the first control signal to the first switching circuit 23. The first switching circuit 23 cannot receive the first control signal, and therefore, disconnects the first control circuit 21 from the first motor assembly and the second motor assembly.

Specifically, the first fault detection module configured to detect a fault status of the first control circuit 21 may include: a first resistor R1, a second resistor R2, a third resistor R3, a first switch K1, and a second switch K2.

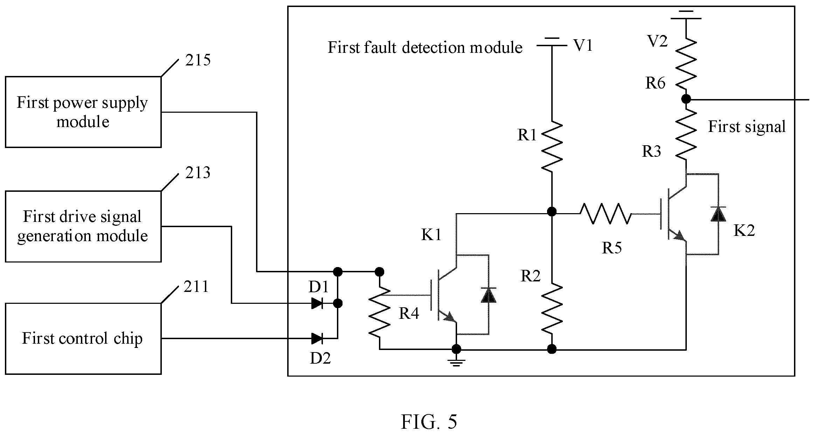

As shown in FIG. 5, a first electrode of the first switch K1 is connected to a second end of the first resistor R1, a second electrode of the first switch K1 is connected to a ground cable, and a control electrode of the first switch K1 is separately connected to the first control chip, the first drive signal generation module 213, and a first power supply V1. A first end of the first resistor R1 is connected to the first power supply V1, and the second end of the first resistor R1 is separately connected to a first end of the second resistor and a control electrode of the second switch. A second end of the second resistor R2 is connected to the ground cable. A first electrode of the second switch K2 is connected to a second end of the third resistor R3, and a second electrode of the second switch K1 is connected to the ground cable. A first end of the third resistor R3 is connected to a second power supply V2, and the second end of the third resistor R3 outputs the first signal.

In an example, when the first signal is in a high-level state, the first signal may represent that the first control circuit 21 is in a faulty state; or when the first signal is in a low-level state, the first signal may represent that the first control circuit 21 is in a non-faulty state.

When the foregoing fault detection module is used to detect a fault status of the first control circuit 21, if the first power supply module 215, the first drive signal generation module 213, and the first control chip 211 are all in a non-faulty state, both a control end of the first switch K1 and a control end of the second switch K2 withstand a start voltage and are turned on. In this case, the switch K2 outputs the first signal in the low-level state. Alternatively, if any one of the first power supply module 215, the first drive signal generation module 213, and the first control chip 211 is in a faulty state, both a control end of the first switch K1 and a control end of the second switch K2 withstand a low-level voltage and are turned off. In this case, the switch K2 outputs the first signal in the high-level state.

In a possible implementation, to prevent the first fault detection module from being damaged because excessively large electric energy generated by the first drive signal generation module 213 and the first control chip 211 is input into the first fault detection module, the first fault detection module may further include: a fourth resistor R4, a fifth resistor R5, a sixth resistor R6, a first diode D1, and a second diode D2.

The first diode D1 is connected between the first drive signal generation module 213 and the control electrode of the first switch K 1. The second diode D2 is connected between the first control chip 211 and the control electrode of the first switch K1. The fourth resistor R4 is connected between the control electrode of the first switch K1 and the second electrode of the first switch K 1. The fifth resistor R5 is connected between the second end of the first resistor R1 and the control electrode of the second switch K2. The sixth resistor R6 is connected between the second end of the third resistor R3 and the first electrode of the second switch K2.

It should be understood that, to prevent a fault of the first power supply module 215 from affecting a detection result of the first fault detection module, the first power supply V1 and the second power supply V2 that are configured to supply power to the first fault detection module may be other power supplies independent of the first control circuit.

In a possible implementation, if the first power supply is a power supply in the second control circuit 22, when the first control circuit 21 detects that the second control circuit 22 is faulty, a third power supply V working in parallel with the first power supply V1 may be added, to prevent the first power supply V1 from being in a suspended state and failing to provide a proper potential because the second control circuit 22 stops working.

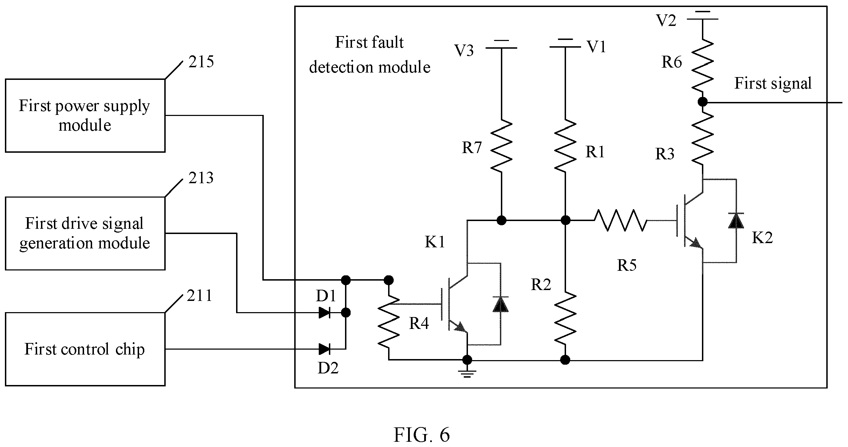

Specifically, as shown in FIG. 6, the first fault detection module may further include a seventh resistor R7. A first end of the seventh resistor R7 is connected to the third power supply V3, and a second end of the seventh resistor R7 is separately connected to the first end of the second resistor R2, the first electrode of the first switch K1, and the control electrode of the second switch K2. The first power supply V1 and the third power supply V3 are respectively power supplies in the first control circuit 21 and the second control circuit 22.

In another possible implementation, both the first power supply V1 and the second power supply V2 are power supplies independent of the first control circuit 21 and the second control circuit 22.

### 2. Second control circuit 22

The second control circuit 22 may be connected to the second switching circuit 24 and the first control circuit 21.

The second control circuit 22 may include a second control chip 221, a second drive module 222, a second drive signal generation module 223, a second control module 224, and a second power supply module 225.

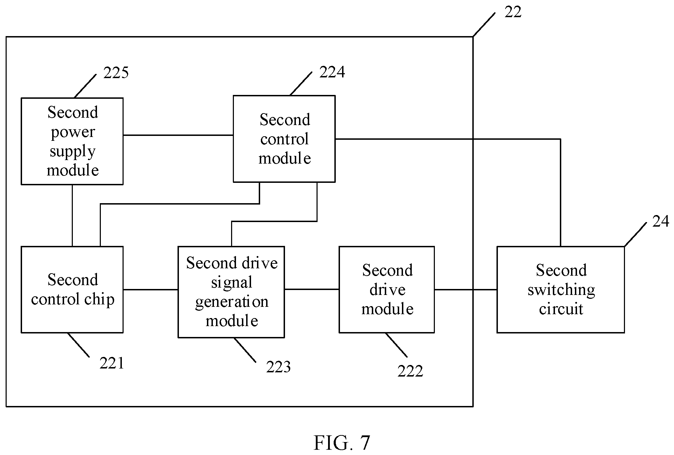

Specifically, as shown in FIG. 7, the second power supply module 225 is separately connected to the second drive module 222, the second drive signal generation module 223, and the second control chip 221; and the second power supply module 225 may supply power to the second drive module 222, the second drive signal generation module 223, and the second control chip 221. The second control chip 221 is connected to the second drive signal generation module 223, and the second control chip 221 may control the second drive signal generation circuit 223 to generate a second drive signal. The second drive signal generation module 223 is connected to the second drive module, and the second drive signal generation module 223 may generate the second drive signal and output the second drive signal to the second drive module 222. The second drive module 222 is connected to the second switching circuit 24, and the second drive module 222 may convert, based on the second drive signal, a second voltage output by the second power supply module 225 into a second drive current, and output the second drive current to the second switching circuit 24. The second control module 224 is separately connected to the second power supply module 225, the second drive signal generation module 223, the second control chip 221, the second switching circuit 24, and the first control circuit 21. The second control module 224 may generate the second signal based on fault statuses of the second power supply module 225, the second control chip 221, and the second drive signal generation module 223, receive the first signal, generate a second control signal based on the first signal and the second signal, and output the second control signal to the second switching circuit 24, where the second control signal is used to control a status of the second switching circuit 24.

Specifically, the second control circuit 22 provides a drive current for the first execution apparatus 25 and/or the second execution apparatus 26 through the second switching circuit 24, so that the execution apparatus controls steering of wheels through the steering apparatus. The motor assemblies in the first execution apparatus 25 and the second execution apparatus 26 convert electric energy into mechanical energy based on an electromagnetic induction effect. For example, the first execution apparatus 25 and the second execution apparatus 26 are three-phase motors. The second drive module 222 configured to output a drive current to a motor assembly may include three bridge arms. It should be noted that for structures of the three bridge arms, refer to FIG. 4. Details are not described herein again in this application.

In actual use, control electrodes of a plurality of switches included in the three bridge arms are all connected to the second drive signal generation module 223, and the second drive signal output by the second drive signal generation module 223 may control turning-on and turning-off of the plurality of switches, so that the three bridge arms can convert the second voltage output by the second power supply module 225 into the second drive current in a form of a three-phase alternating current. A middle point in each bridge arm outputs one phase of the three-phase alternating current. The second drive module 222 outputs the three-phase alternating current to the motor assembly through the second switching circuit 24, so that the three armature windings on the motor assembly generate a spatial rotating magnetic field, thereby driving a motor rotor to rotate, converting electric energy into mechanical energy, and providing steering power for the steering apparatus.

In a possible implementation, when the second control circuit 22 is used to provide a drive current for each of the first motor assembly and the second motor assembly, steering power provided by the first motor assembly and the second motor assembly may be different. In this case, drive currents required by the first motor assembly and the second motor assembly are also different. To meet a steering requirement of the electric vehicle, the second drive module 222 may include six bridge arms. The first three bridge arms may be connected to the first motor assembly through the second switching circuit 24, and the last three bridge arms may be connected to the second motor assembly through the second switching circuit 24. When the second switching circuit 24 is in the fourth state, the second control circuit 22 may provide a proper drive current for each of the first motor assembly and the second motor assembly by using the six bridge arms, to meet the steering requirement of the electric vehicle.

During specific implementation, the second drive module 222 can output the output three-phase alternating current to the first execution apparatus 25 and/or the second execution apparatus 26 only when the second switching circuit 24 is in a fixed state. The following describes in detail a structure of the second control module 224 and a process in which the second control module 224 controls a status of the second switching circuit 24.

The second control module 224 includes a second fault detection module and a second control sub-module.

The second fault detection module is separately connected to the second power supply module 225, the second drive signal generation module 223, the second control chip 221, and the second control sub-module. The second fault detection module is configured to: detect the fault detection statuses of the second power supply module 225, the second drive signal generation module 223, and the second control chip 221; generate the second signal based on the fault detection statuses of the second power supply module 225, the second drive signal generation module 223, and the second control chip 221; and output the second signal to the first control circuit 21. The second control sub-module is separately connected to the second switching circuit 24 and the first control circuit 21. The second control sub-module is configured to: generate the second control signal based on the first signal and the second signal, and send the second control signal to the second switching circuit 24.

In actual use, when any one of the second power supply module 225, the second drive signal generation module 223, and the second control chip 221 is faulty, it may be determined that the second control circuit 22 is faulty.

During specific implementation, when the second signal represents that the second control circuit 22 is not faulty, the second control sub-module controls the second switching circuit 24 to be in the third state. In this case, the second drive module 222 may be connected to the second motor assembly, and the second drive module 222 may output a three-phase alternating current to the second motor assembly. The second motor assembly converts the received three-phase alternating current into mechanical energy, to output the second steering power to the steering apparatus. When the first signal represents that the first control circuit 21 is faulty, the second control sub-module may control the second switching circuit 24 to switch from the third state to the fourth state. In this case, the second drive module 222 may be connected to the first motor assembly and the second motor assembly, and the second drive module 222 may output a three-phase alternating current to the first motor assembly and the second motor assembly. The first motor assembly outputs the first steering power, and the second motor assembly outputs the second steering power. In other words, when the first control circuit 21 is faulty, the second control circuit 22 may control the first motor assembly and the second motor assembly to output all the steering power.

During specific implementation, to reduce energy consumption of an electric vehicle drive system, when it is determined that the second signal represents that the second control circuit 22 is faulty, the second control sub-module may stop sending the second control signal to the second switching circuit 24. The second switching circuit 24 cannot receive the second control signal, and therefore, disconnects the second control circuit 22 from the first motor assembly and the second motor assembly.

In an example, when the second signal is in a high-level state, the second signal represents that the second control circuit 22 is in a faulty state; or when the second signal is in a low-level state, the second signal represents that the second control circuit 22 is in a non-faulty state.

Specifically, for a structure of the second fault detection module configured to detect the fault status of the second control circuit 22, refer to the fault detection circuits shown in FIG. 5 and FIG. 6, except that the control electrode of the first switch is separately connected to the second control chip 221, the second drive signal generation module 223, and the second power supply module 225, and is configured to detect fault statuses of the second control chip 221, the second drive signal generation module 223, and the second power supply module 225. A detection principle thereof is the same as a detection principle of the first fault detection module shown in FIG. 5 and FIG. 6. Details are not described herein again in this application.

### 3. First switching circuit 23

The first switching circuit 23 is coupled to the steering apparatus.

The first switching circuit 23 includes a first switch module and a second switch module.

Specifically, an input end of the first switch module is connected to the first control circuit 21, and an output end of the first switch module is connected to the first execution apparatus 25. An input end of the second switch module is connected to the first control circuit 21, and an output end of the second switch module is connected to the second execution apparatus 26.

A function of disposing the first switch module in the first switching circuit 23 is to control the connection between the first control circuit 21 and the first execution apparatus 25 by controlling turning-on or turning-off of the first switch module. A function of disposing the second switch module is to control the connection between the first control circuit 21 and the second execution apparatus 26 by controlling turning-on or turning-off of the second switch module.

During specific implementation, when the first switch module is turned on, the first switch module forms a connection component between the first control circuit 21 and the first execution apparatus 25; and when the first switch module is turned on, the second switch module forms a connection component between the first control circuit 21 and the second execution apparatus 26.

Specifically, the motor assemblies in the first execution apparatus 25 and the second execution apparatus 26 convert electric energy into mechanical energy based on electromagnetic induction. Generally, three armature windings are disposed in the motor assembly. For example, the first execution apparatus 25 and the second execution apparatus 26 are three-phase motors. The first motor assembly in the first execution apparatus 25 includes three first armature windings N1, and the second motor assembly in the second execution apparatus 26 includes three second armature windings N2. The first switch module includes third switches K3 that are in a one-to-one correspondence with the first armature windings N1, and the second switch module includes fourth switches K4 that are in a one-to-one correspondence with the second armature windings N2.

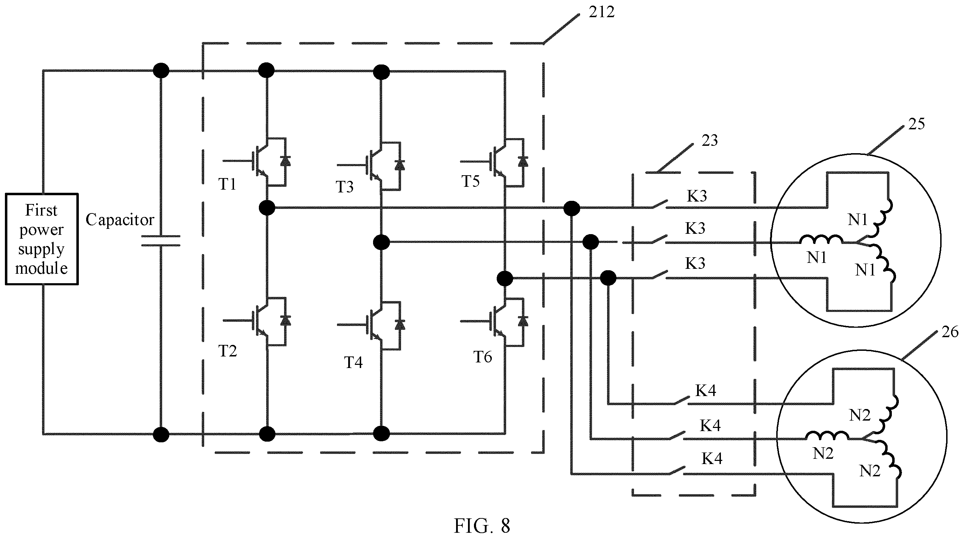

Specifically, as shown in FIG. 8, a first electrode of each third switch K3 is connected to the first control circuit 21, and a second electrode of each third switch K3 is connected to a corresponding first armature winding N1. A first electrode of each fourth switch K4 is connected to the first control circuit 21, and a second electrode of each fourth switch K4 is connected to a corresponding second armature winding N2.

In actual use, when the three third switches K3 are turned on, the first switching circuit 23 is in the first state; and when the three third switches K3 and the three fourth switches K4 are all turned on, the first switching circuit 23 is in the second state.

Specifically, when the three third switches K3 are turned on, the first drive module 212 in the first control circuit 21 is connected to the three first windings N1. In this case, the first drive module 212 may output the generated first drive current in a form of a three-phase alternating current to the first motor assembly, so that the three armature windings N1 on the first motor assembly generate a spatial rotating magnetic field, thereby driving a rotor of the first motor assembly to rotate, converting electric energy into mechanical energy, and providing the first steering power for the steering apparatus.

When the three fourth switches K4 are turned on, the first drive module 212 in the first control circuit 21 is connected to the three second windings N2. In this case, the first drive module 212 outputs the generated first drive current in a form of a three-phase alternating current to the second motor assembly, so that the three armature windings N2 on the second motor assembly generate a spatial rotating magnetic field, thereby driving a rotor of the second motor assembly to rotate, converting electric energy into mechanical energy, and providing the second steering power for the steering apparatus.

In actual use, if the fourth switch K4 is an MOSFET, a parasitic diode is disposed in the fourth switch K4. When the first control circuit 21 controls the first execution apparatus 25 to work, and the second control circuit 22 controls the second execution apparatus 26 to work, to prevent the first control circuit 21 from being connected to both the first execution apparatus 25 and the second execution apparatus 26 because the parasitic diode of the fourth switch K4 meets a turn-on condition, the second switch module may further include fifth switches K5 that are in a one-to-one correspondence with the fourth switches K4. The first control circuit 21 is connected to the armature winding N2 in the second execution apparatus 26 by using the fifth switch K5 and the fourth switch K4, and a direction of the parasitic diode in the fourth switch K4 is opposite to a direction of a parasitic diode in the fifth switch K5.

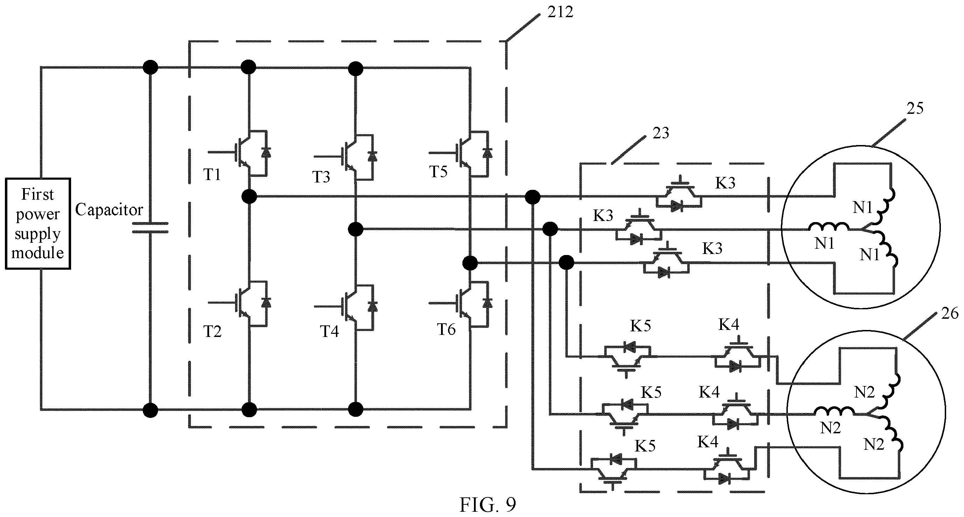

In an example, the fifth switch K5 may be connected between the first drive module 212 and a corresponding fourth switch K4, that is, the first drive module 212 is connected to the fourth switch K4 by using the fifth switch K4. As shown in FIG. 9, a second electrode of each fifth switch K5 is connected to the first drive module 212 in the first control circuit 21, and a first electrode of each fifth switch K5 is connected to a first electrode of a corresponding fourth switch K4.

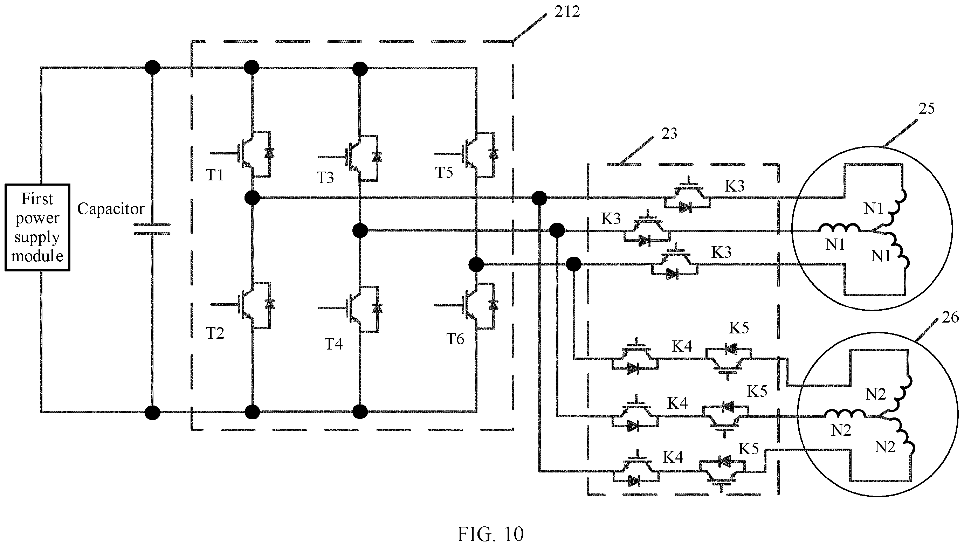

In another example, the fifth switch K5 is connected between the fourth switch K4 and the second armature winding N2, that is, the fourth switch K4 is connected to a corresponding second armature winding N2 by using a corresponding fifth switch K5. As shown in FIG. 10, a second electrode of each fifth switch K5 is connected to a second electrode of a corresponding fourth switch K4, and the second electrode of each fifth switch K5 is connected to the second armature winding N2 corresponding to the connected fourth switch K4.

It should be understood that, because polarities at joints of the fourth switch K4 and the fifth switch K5 are the same, a current transmission direction of the parasitic diode in the fourth switch K4 is opposite to a current transmission direction of the parasitic diode in the fifth switch K5. When the first control circuit 21 controls the first execution apparatus 25 to work, and the second control circuit 22 controls the second execution apparatus 26 to work, if the parasitic diode of the fourth switch K4 meets a turn-on condition of the parasitic diode of the fourth switch K4, the parasitic diode of the fifth switch K5 disconnects the first control circuit from the second execution apparatus 26 because the parasitic diode of the fifth switch K5 cannot meet a turn-on condition. In this way, mutual isolation between components is implemented, mutual interference of the first control circuit and the second control circuit in a working process and component damage caused by current backflow are avoided, and working stability and security of the first control circuit and the second control circuit are ensured.

### 4. Second switching circuit 24

The second switching circuit 24 is coupled to the steering apparatus.

The second switching circuit 24 includes a third switch module and a fourth switch module.

Specifically, an input end of the third switch module is connected to the second control circuit, and an output end of the third switch module is connected to the second execution apparatus 26. An input end of the fourth switch module is connected to the second control circuit, and an output end of the fourth switch module is connected to the first execution apparatus 25.

A function of disposing the third switch module in the second switching circuit 24 is to control the connection between the second control circuit 22 and the second execution apparatus 26 by controlling turning-on or turning-off of the third switch module. A function of disposing the fourth switch module is to control the connection between the second control circuit 22 and the first execution apparatus 25 by controlling turning-on or turning-off of the fourth switch module.

During specific implementation, when the third switch module is turned on, the third switch module forms a connection component between the second control circuit 22 and the second execution apparatus 26; and when the fourth switch module is turned on, the fourth switch module forms a connection component between the second control circuit 22 and the first execution apparatus 25.

Specifically, the motor assemblies in the first execution apparatus 25 and the second execution apparatus 26 convert electric energy into mechanical energy based on electromagnetic induction. Therefore, generally, three armature windings are disposed in the motor assembly. For example, the first execution apparatus 25 and the second execution apparatus 26 are three-phase motors. The first motor assembly in the first execution apparatus 25 includes three first armature windings N1, and the second motor assembly in the second execution apparatus 26 includes three second armature windings N2. The third switch module includes sixth switches K6 that are in a one-to-one correspondence with the second armature windings, and the fourth switch module includes seventh switches K7 that are in a one-to-one correspondence with the first armature windings.

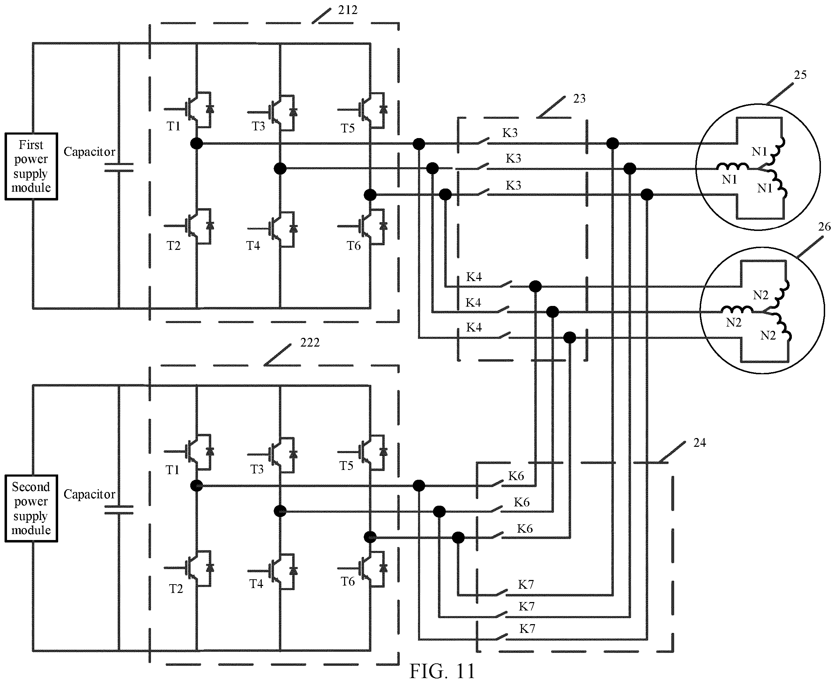

Specifically, as shown in FIG. 11, a first electrode of each sixth switch K6 is connected to the second control circuit 22, and a second electrode of each sixth switch K6 is connected to a corresponding second armature winding N2. A first electrode of each seventh switch K7 is connected to the second control circuit 22, and a second electrode of each seventh switch K7 is connected to a corresponding first armature winding N1.

In actual use, when the three sixth switches K6 are turned on, the second switching circuit 24 is in the third state; and when the three sixth switches K6 and the three seventh switches K7 are all turned on, the second switching circuit 24 is in the fourth state.

Specifically, when the three sixth switches K6 are turned on, the second drive module 222 in the second control circuit 22 is connected to the three second windings N2. In this case, the second drive module 222 outputs the generated second drive current in a form of a three-phase alternating current to the second motor assembly, so that the three armature windings N2 on the second motor assembly generate a spatial rotating magnetic field, thereby driving a rotor of the second motor assembly to rotate, converting electric energy into mechanical energy, and providing the second steering power for the steering apparatus.

When the three seventh switches K7 are turned on, the second drive module 222 in the second control circuit 22 is connected to the three first windings N1. In this case, the second drive module 222 outputs the generated second drive current in a form of a three-phase alternating current to the first motor assembly, so that the three armature windings N1 on the first motor assembly generate a spatial rotating magnetic field, thereby driving a rotor of the first motor assembly to rotate, converting electric energy into mechanical energy, and providing the first steering power for the steering apparatus.

In actual use, if the seventh switch K7 is an MOSFET, a parasitic diode is disposed in the seventh switch K7. When the first control circuit 21 controls the first execution apparatus 25 to work, and the second control circuit 22 controls the second execution apparatus 26 to work, to prevent the second control circuit from being connected to both the first execution apparatus 25 and the second execution apparatus 26 because the parasitic diode of the seventh switch K7 meets a turn-on condition, the fourth switch module may further include eighth switches K8 that are in a one-to-one correspondence with the seventh switches K7. The second control circuit 22 is connected to the armature winding N1 in the first execution apparatus 25 by using the seventh switch K7 and the eighth switch K8, and a direction of the parasitic diode in the seventh switch K7 is opposite to a direction of a parasitic diode in the eighth switch K8.

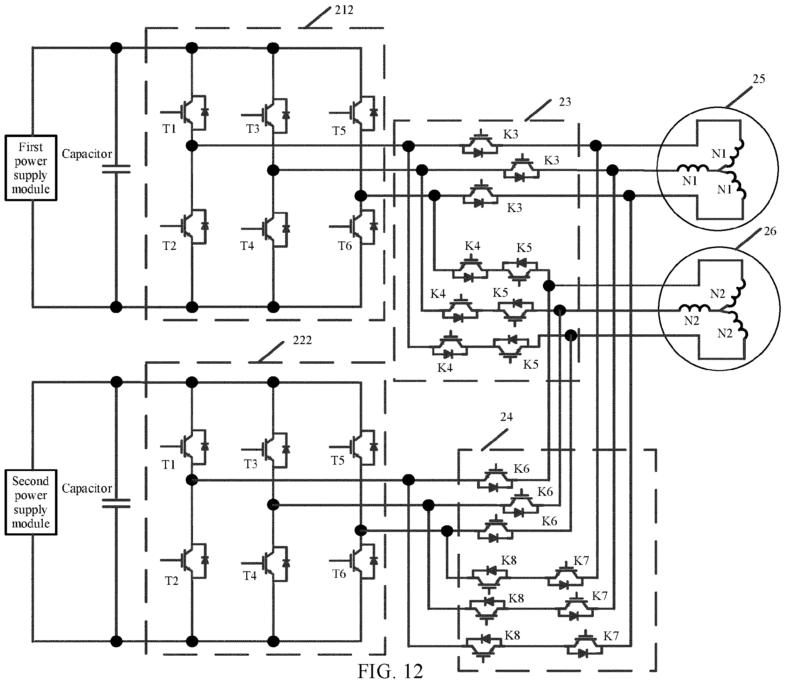

In an example, the eighth switch K8 may be connected between the second drive module 222 and a corresponding seventh switch K7, that is, the second drive module 222 is connected to the seventh switch K7 by using the eighth switch K8. As shown in FIG. 12, a second electrode of each eighth switch K8 is connected to the second drive module 222 in the second control circuit 22, and a first electrode of each eighth switch K8 is connected to a first electrode of a corresponding seventh switch K7.

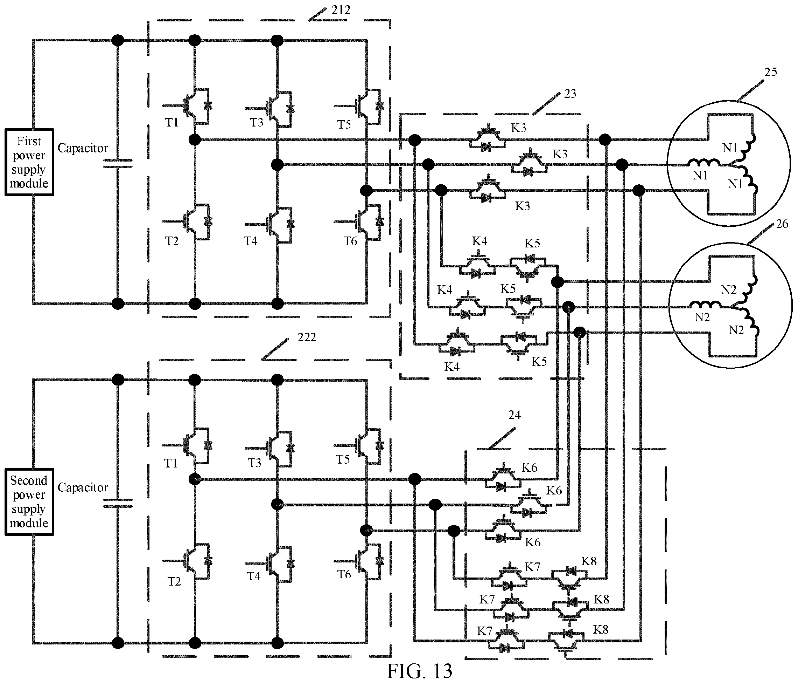

In another example, the eighth switch K8 is connected between the seventh switch K7 and the first armature winding N1, that is, the seventh switch K7 is connected to a corresponding first armature winding N1 by using a corresponding eighth switch K8. As shown in FIG. 13, a second electrode of each eighth switch K8 is connected to a second electrode of a corresponding seventh switch K7, and a first electrode of each eighth switch K8 is connected to a first armature winding N1 corresponding to the connected seventh switch K7.

It should be understood that, because polarities at joints of the seventh switch K7 and the eighth switch K8 are the same, a current transmission direction of the parasitic diode in the seventh switch K7 is opposite to a current transmission direction of the parasitic diode in the eighth switch K8. When the first control circuit 21 controls the first execution apparatus 25 to work, and the second control circuit 22 controls the second execution apparatus 26 to work, if the parasitic diode of the seventh switch K7 meets a turn-on condition of the parasitic diode of the seventh switch K7, the parasitic diode of the eighth switch K8 disconnects the second control circuit from the first execution apparatus 25 because the parasitic diode of the eighth switch K8 cannot meet a turn-on condition. In this way, mutual isolation between components is implemented, mutual interference of the first control circuit and the second control circuit in a working process and component damage caused by current backflow are avoided, and working stability and security of the first control circuit and the second control circuit are ensured.

This application further provides an electric vehicle. The electric vehicle has a body, wheels, and the electric vehicle control system in any one of the foregoing solutions. When the electric vehicle is controlled to steer, if both a first control circuit and a second control circuit are in a non-faulty state, the first switching circuit is controlled to be in a first state, and the second switching circuit is controlled to be in a third state. In this case, the first control circuit provides first steering power by using a first execution apparatus, and the second control circuit provides second steering power by using a second execution apparatus. When either the first control circuit or the second control circuit is faulty, a control circuit of an apparatus that is not faulty may be controlled to provide all the steering power by using the first execution apparatus and the second execution apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric vehicle control system, comprising a first control circuit, a second control circuit, a first switching circuit, a second switching circuit, a first execution apparatus, and a second execution apparatus, wherein
the first control circuit is connected to the first switching circuit, and the first control circuit is configured to: provide a drive current for the first execution apparatus and/or the second execution apparatus, and control a status of the first switching circuit;
the second control circuit is connected to the second switching circuit, and the second control circuit is configured to: provide a drive current for the second execution apparatus and/or the first execution apparatus, and control a status of the second switching circuit;
the first switching circuit is separately connected to the first execution apparatus and the second execution apparatus, wherein when the first switching circuit is in a first state, the first control circuit is connected to the first execution apparatus, and when the first switching circuit is in a second state, the first control circuit is separately connected to the first execution apparatus and the second execution apparatus; and
the second switching circuit is separately connected to the first execution apparatus and the second execution apparatus, wherein when the second switching circuit is in a third state, the second control circuit is connected to the second execution apparatus, and when the second switching circuit is in a fourth state, the second control circuit is separately connected to the first execution apparatus and the second execution apparatus.

2. The electric vehicle control system according to claim 1, wherein the first switching circuit comprises a first switch module and a second switch module, wherein
an input end of the first switch module is connected to the first control circuit, and an output end of the first switch module is connected to the first execution apparatus; and
an input end of the second switch module is connected to the first control circuit, and an output end of the second switch module is connected to the second execution apparatus; and
the second switching circuit comprises a third switch module and a fourth switch module, wherein
an input end of the third switch module is connected to the second control circuit, and an output end of the third switch module is connected to the second execution apparatus; and
an input end of the fourth switch module is connected to the second control circuit, and an output end of the fourth switch module is connected to the first execution apparatus.

3. The electric vehicle control system according to claim 1, wherein the first control circuit comprises a first control chip, a first drive module, a first drive signal generation module, a first control module, and a first power supply module, wherein
the first power supply module is separately connected to the first control chip, the first drive module, and the first drive signal generation module, and the first power supply module is configured to supply power to the first control chip, the first drive module, and the first drive signal generation module;
the first control chip is connected to the first drive signal generation module, and is configured to control the first drive signal generation module to generate a first drive signal;
the first drive signal generation module is connected to the first drive module, and the first drive signal generation module is configured to: generate the first drive signal and output the first drive signal to the first drive module;
the first drive module is connected to the first switching circuit, and the first drive module is configured to: convert, based on the first drive signal, a first voltage output by the first power supply module into a first drive current, and output the first drive current to the first switching circuit; and
the first control module is separately connected to the first power supply module, the first drive signal generation module, the first control chip, the first switching circuit, and the second control circuit, and the first control module is configured to: generate a first signal based on fault statuses of the first power supply module, the first control chip, and the first drive signal generation module; output the first signal to the second control circuit; receive a second signal sent by the second control circuit; generate a first control signal based on the first signal and the second signal; and output the first control signal to the first switching circuit, wherein the first control signal is used to control a status of the first switching circuit, the first signal represents a fault status of the first control circuit, and the second signal represents a fault status of the second control circuit; and
the second control circuit comprises a second control chip, a second drive module, a second drive signal generation module, a second control module, and a second power supply module, wherein
the second power supply module is separately connected to the second drive module, the second drive signal generation module, and the second control chip, and the second power supply module is configured to supply power to the second drive module, the second drive signal generation module, and the second control chip;
the second control chip is connected to the second drive signal generation module, and the second control chip is configured to control the second drive signal generation circuit to generate a second drive signal;
the second drive signal generation module is connected to the second drive module, and is configured to: generate the second drive signal and output the second drive signal to the second drive module;
the second drive module is connected to the second switching circuit, and the second drive module is configured to: convert, based on the second drive signal, a second voltage output by the second power supply module into a second drive current; and output the second drive current to the second switching circuit; and
the second control module is separately connected to the second power supply module, the second drive signal generation module, the second control chip, the second switching circuit, and the first control circuit, and the second control module is configured to: generate the second signal based on fault statuses of the second power supply module, the second control chip, and the second drive signal generation module; receive the first signal; generate a second control signal based on the first signal and the second signal; and output the second control signal to the second switching circuit, wherein the second control signal is used to control a status of the second switching circuit.

4. The electric vehicle control system according to claim 3, wherein the first control module comprises a first fault detection module and a first control sub-module, wherein
the first fault detection module is separately connected to the first power supply module, the first drive signal generation module, the first control chip, and the first control sub-module, and the first fault detection module is configured to: detect the fault detection statuses of the first power supply module, the first drive signal generation module, and the first control chip; generate the first signal based on the fault detection statuses of the first power supply module, the first drive signal generation module, and the first control chip; and output the first signal to the first control sub-module and the second control circuit; and
the first control sub-module is separately connected to the first switching circuit and the second control circuit, and the first control sub-module is configured to: receive the second signal sent by the second control circuit, generate the first control signal based on the first signal and the second signal, and output the first control signal to the first switching circuit; and
the second control module comprises a second fault detection module and a second control sub-module, wherein
the second fault detection module is separately connected to the second power supply module, the second drive signal generation module, the second control chip, and the second control sub-module, and the second fault detection module is configured to: detect the fault detection statuses of the second power supply module, the second drive signal generation module, and the second control chip; generate the second signal based on the fault detection statuses of the second power supply module, the second drive signal generation module, and the second control chip; and output the second signal to the first control circuit; and
the second control sub-module is separately connected to the second switching circuit and the first control circuit, and the second control sub-module is configured to: generate the second control signal based on the first signal and the second signal, and send the second control signal to the second switching circuit.

5. The electric vehicle control system according to claim 4, wherein the first fault detection module comprises a first resistor, a second resistor, a third resistor, a first switch, and a second switch, wherein
a first electrode of the first switch is connected to a second end of the first resistor, a second electrode of the first switch is connected to a ground cable, and a control electrode of the first switch is separately connected to the first control chip, the first drive signal generation module, and the first power supply module;
a first end of the first resistor is connected to a first power supply, and the second end of the first resistor is separately connected to a first end of the second resistor and a control electrode of the second switch;
a second end of the second resistor is connected to the ground cable;
a first electrode of the second switch is connected to a second end of the third resistor, and a second electrode of the second switch is connected to the ground cable; and
a first end of the third resistor is connected to a second power supply, and the second end of the third resistor outputs the first signal.

6. The electric vehicle control system according to claim 5, wherein the first fault detection module further comprises a fourth resistor, a fifth resistor, a sixth resistor, a first diode, and a second diode, wherein
the first diode is connected between the first drive signal generation module and the control electrode of the first switch;
the second diode is connected between the first control chip and the control electrode of the first switch;
the fourth resistor is connected between the control electrode of the first switch and the second electrode of the first switch;
the fifth resistor is connected between the second end of the first resistor and the control electrode of the second switch; and
the sixth resistor is connected between the second end of the third resistor and the first electrode of the second switch.

7. The electric vehicle control system according to claim 5 or 6, wherein the first fault detection module further comprises a seventh resistor, wherein
a first end of the seventh resistor is connected to a third power supply, and a second end of the seventh resistor is separately connected to the first end of the second resistor, the first electrode of the first switch, and the control electrode of the second switch.

8. The electric vehicle control system according to any one of claims 1 to 7, wherein the first execution apparatus comprises a first motor assembly, and the second execution apparatus comprises a second motor assembly.

9. The electric vehicle control system according to claim 8, wherein the first motor assembly comprises three first armature windings, and the first switch module comprises third switches that are in a one-to-one correspondence with the first armature windings;
a first electrode of each third switch is connected to the first control circuit, and a second electrode of each third switch is connected to a corresponding first armature winding;
the second motor assembly comprises three second armature windings, and the second switch module comprises fourth switches that are in a one-to-one correspondence with the second armature windings; and
a first electrode of each fourth switch is connected to the first control circuit, and a second electrode of each fourth switch is connected to a corresponding second armature winding.

10. The electric vehicle control system according to claim 9, wherein the second switch module further comprises fifth switches that are in a one-to-one correspondence with the fourth switches; and
a second electrode of each fifth switch is connected to the first control circuit, and a first electrode of each fifth switch is connected to a first electrode of a corresponding fourth switch; or
a second electrode of each fifth switch is connected to a second electrode of a corresponding fourth switch, and the second electrode of each fifth switch is connected to a second armature winding corresponding to a connected seventh switch.

11. The electric vehicle control system according to claim 9 or 10, wherein the third switch module comprises sixth switches that are in a one-to-one correspondence with the second armature windings;
a first electrode of each sixth switch is connected to the second control circuit, and a second electrode of each sixth switch is connected to a corresponding second armature winding;
the fourth switch module comprises seventh switches that are in a one-to-one correspondence with the first armature windings; and
a first electrode of each seventh switch is connected to the second control circuit, and a second electrode of each seventh switch is connected to a corresponding first armature winding.

12. The electric vehicle control system according to claim 11, wherein the fourth switch module further comprises eighth switches that are in a one-to-one correspondence with the seventh switches; and
a second electrode of each eighth switch is connected to the second control circuit, and a first electrode of each eighth switch is connected to a first electrode of a corresponding seventh switch; or
a second electrode of each eighth switch is connected to a second electrode of a corresponding seventh switch, and a first electrode of each eighth switch is connected to a first armature winding corresponding to the connected fourth switch.

13. The electric vehicle control system according to any one of claims 1 to 12, further comprising a power battery, wherein
the power battery is separately connected to the first control circuit and the second control circuit, and the power battery is configured to supply power to the first control circuit and the second control circuit.

14. An electric vehicle, comprising a body, wheels, and the electric vehicle control system according to any one of claims 1 to 13.
